# FASCICULE DE BREVET EUROPEEN

(11) **EP 3 722 256 B1**
(45) Date de publication et mention de la délivrance du brevet: **26.07.2023**
(21) Numéro de dépôt: 20167101.3
(22) Date de dépôt: 31.03.2020
(51) Int. Cl.: C01B 3/06, B01J 7/02

(54) **DISPOSITIF DE GENERATION D'UN GAZ**
VORRICHTUNG ZUR ERZEUGUNG EINES GASES
GAS GENERATION DEVICE

(30) Priorité: 09.04.2019 FR 1903787
(43) Date de publication de la demande: 14.10.2020
(73) Titulaire: Commissariat à l'Energie Atomique et aux Energies Alternatives, 75015 Paris (FR)
(72) Inventeur: DELMAS, Jérôme, 38054 GRENOBLE CEDEX 9 (FR); BLANCHOT, Olivier, 38054 GRENOBLE CEDEX 9 (FR); CAPRON, Philippe, 38054 GRENOBLE CEDEX 9 (FR); FAUCHEUX, Vincent, 38054 GRENOBLE CEDEX 9 (FR); ROUGEAUX, Isabelle, 38054 GRENOBLE CEDEX 9 (FR); TOSONI, Olivier, 38054 GRENOBLE CEDEX 9 (FR)
(74) Mandataire: Cabinet Nony

(56) Documents cités:
- EP-A1- 1 496 014
- JP-A- 2009 161 378
- US-A1- 2006 185 242

## Description

### Domaine technique

La présente invention concerne un dispositif pour générer un gaz par réaction catalysée d'un liquide et un procédé de génération du gaz.

### Technique antérieure

Une méthode bien connue pour générer du dihydrogène consiste à mettre une solution aqueuse d'hydrure, par exemple une solution de borohydrure de sodium, au contact d'un catalyseur de la réaction d'hydrolyse de l'hydrure, formé par exemple de cobalt, de platine ou de ruthénium. Au contact du catalyseur, une réaction d'hydrolyse de la solution aqueuse se produit, générant du dihydrogène.

A titre illustratif, WO 2012/003112 A1 et WO 2010/051557 A1 décrivent des générateurs pour mettre en oeuvre une telle hydrolyse catalysée d'hydrure. Les générateurs de gaz décrits dans ces documents comportent une enceinte contenant, en fonctionnement, une solution aqueuse d'hydrure, et un système catalytique définissant une chambre de catalyse contenant un catalyseur de l'hydrolyse de la solution aqueuse d'hydrure.

Le système catalytique comporte un corps et un couvercle amovible. En position fermée du système catalytique, le couvercle et le corps isolent ensemble le catalyseur de la solution aqueuse d'hydrure. Il n'y a alors pas de génération de dihydrogène. En position ouverte du système catalytique, le couvercle est disposé à distance du corps. La solution aqueuse d'hydrure entre alors en contact avec le catalyseur, initiant ainsi la génération de dihydrogène. Le dihydrogène ainsi généré est évacué hors de l'enceinte au travers d'une ouverture d'évacuation.

Pour éviter que la pression de dihydrogène généré ne soit trop élevée à l'intérieur de l'enceinte, le système catalytique décrit dans WO 2012/003112 A1 et WO 2010/051557 A1 comporte une membrane élastomère, se présentant sous la forme d'un tube cylindrique creux, fixée à la fois sur le corps et sur le couvercle. Le corps comporte en outre un drain débouchant hors de l'enceinte à l'une de ses extrémités et dans l'espace intérieur de la membrane à son extrémité opposée, de telle sorte que la pression dans l'espace intérieur de la membrane est égale à la pression atmosphérique. Ainsi, lorsque la pression de dihydrogène dans l'enceinte est supérieure à une pression seuil, le couvercle est poussé contre le corps sous l'effet de la pression dans l'enceinte, contractant la membrane élastomère par effet de torsion, jusqu'à la position fermée du système catalytique. Lorsque la pression dans l'enceinte est inférieure à la pression seuil, la membrane élastomère, cherchant à retrouver sa position d'équilibre, se déploie et dégage le couvercle dans la position ouverte du système catalytique, de sorte à permettre l'accès de la solution aqueuse d'hydrure au catalyseur.

Le contrôle de l'exposition du catalyseur à la solution aqueuse d'hydrure s'effectue dans WO 2012/003112 A1 et WO 2010/051557 A1 de manière passive, c'est-à-dire que l'ouverture et la fermeture du système catalytique s'opère uniquement en fonction de la pression de dihydrogène dans l'enceinte. Le système catalytique décrit dans ces deux documents est donc peu souple d'utilisation.

Les systèmes catalytiques de WO 2012/003112 A1 et de WO 2010/051557 A1 présentent d'autres inconvénients.

Afin d'assurer une contraction et un déploiement optimal de la membrane élastomère, il est nécessaire que la hauteur de la membrane soit faible, ce qui limite l'accès au catalyseur de la solution aqueuse à base d'hydrure.

La pression seuil de fermeture du système catalytique est déterminée par la rigidité de la membrane élastomère qui dépend de la forme et des propriétés mécaniques, notamment élastiques, de la membrane élastomère. Le dimensionnement de la membrane est donc complexe pour assurer un fonctionnement optimal du générateur de gaz.

Par ailleurs, il n'est pas possible de contrôler l'ouverture et la fermeture du système catalytique indépendamment de la pression au sein de l'enceinte. Par défaut, le système catalytique est ouvert, et il est nécessaire que la pression de gaz dépasse la pression seuil pour que le système soit fermé. En cas de fuite, la génération d'hydrogène est alors non maîtrisée.

Enfin, le système catalytique de l'art antérieur est relativement encombrant, ce qui est dommageable pour les applications nomades (téléphone ou ordinateur portable, drône, etc...) auquel il peut être destiné.

Notamment, les dimensions et la forme du système catalytique de WO 2012/003112 A1 et de WO 2010/051557 A1 doivent être modifiées dès lors que les dimensions et la forme du catalyseur sont modifiées. Il est donc de conception complexe.

Il existe donc un besoin pour un générateur de gaz utile pour générer un gaz par mise en contact d'un liquide avec un catalyseur s'affranchissant des inconvénients précités.

### Résumé de l'invention

L'invention répond à ce besoin et propose un dispositif comportant un système catalytique et un système électromagnétique,
le système catalytique définissant une chambre de catalyse et comportant un catalyseur d'une réaction de génération d'un gaz à partir d'un liquide, le catalyseur étant logé dans la chambre de catalyse,
le système électromagnétique comportant une bobine et un barreau mobile par rapport à la bobine, le barreau étant fixé sur le système catalytique et comportant un aimant et un noyau, le système électromagnétique étant configuré pour déplacer le barreau par rapport à la bobine lors du passage d'un courant électrique dans la bobine, de manière à disposer le système catalytique selon une position ouverte, dans laquelle la chambre de catalyse est en communication fluidique avec l'extérieur,
le système catalytique étant disposé selon une position fermée dans laquelle la chambre de catalyse est hermétiquement close, en l'absence d'un courant électrique parcourant la bobine.

En mettant le dispositif en contact avec le liquide, la génération de gaz peut être déclenchée simplement en alimentant la bobine au moyen d'un courant électrique, pour disposer la chambre de catalyse en position ouverte. Lorsque la bobine est alimentée électriquement et transporte un courant électrique, elle génère un champ électromagnétique qui attire l'aimant vers elle. Le système catalytique, fixé au barreau, est déplacé conséquemment de la position fermée jusqu' à la position ouverte. Le liquide peut alors pénétrer dans la chambre de catalyse et entrer en contact avec le catalyseur. Le gaz peut ainsi être généré.

La génération de gaz peut ensuite être arrêtée aussi simplement en coupant l'alimentation électrique de la bobine.

Il est ainsi possible d'arrêter, notamment en respectant des critères préétablis, la génération d'hydrogène en cas de fonctionnement défectueux d'un générateur comportant le dispositif ou d'une pile à combustible alimentée par un tel générateur.

Le gaz peut ainsi être généré, indépendamment de la pression du gaz et/ou de la température du gaz dans l'enceinte. Par rapport au dispositif décrit dans WO 2012/003112 A1 et WO 2010/051557 A1, lé génération de gaz peut être déclenchée et arrêtée selon la commande de l'utilisateur du dispositif, indépendamment de la valeur de la pression du gaz dans l'enceinte. Par ailleurs, le dispositif selon l'invention est d'encombrement limité.

En position fermée, la chambre de catalyse est « hermétiquement close ». Elle est étanche à un liquide et à un gaz. Par exemple, lorsque le dispositif est immergé dans un liquide, en position fermée, le liquide ne peut pas pénétrer dans la chambre de catalyse. On réduit ainsi le risque d'une génération de gaz non souhaitée.

Par « position ouverte », on entend toute position dans laquelle la chambre de catalyse est en communication fluidique avec l'extérieur. Par « extérieur », on entend ce qui est hors de la chambre de catalyse. En particulier, la position ouverte peut être une position ouverte extrêmale selon laquelle la course de l'actionneur est atteinte.

Au moins une partie du système catalytique peut être soumise à une force de fermeture électromagnétique, induite par l'aimant, qui maintient le système catalytique dans la position fermée, en l'absence de courant parcourant la bobine. Outre sa participation à l'ouverture du système catalytique comme décrit plus haut, l'aimant participe avantageusement à la fermeture du système catalytique.

De préférence, au moins une portion du système catalytique est en un matériau ferromagnétique. Le matériau ferromagnétique est par exemple du fer, ou un alliage d'au moins un métal choisi parmi le fer, le cobalt et le nickel, notamment de l'acier.

De préférence, le système catalytique comporte une première pièce et une deuxième pièce fixée rigidement au barreau. Les première et deuxième pièces définissent ensemble la chambre de catalyse et sont mobiles l'une par rapport à l'autre entre les positions ouverte et fermée. De préférence, la première pièce obture hermétiquement la deuxième pièce dans la position fermée, ou *vice-versa.* De préférence, le système catalytique comporte un joint d'étanchéité, comprimé entre les première et deuxième pièces dans la position fermée pour améliorer l'étanchéité de la chambre de catalyse.

Le joint d'étanchéité peut être monté sur la première pièce ou sur la deuxième pièce.

Les première et deuxième pièces peuvent être mobiles en translation et/ou en rotation, notamment seulement en translation, l'une par rapport à l'autre entre les positions ouverte et fermée.

Dans la position ouverte, les première et deuxième pièces définissent au moins une ouverture reliant la chambre de catalyse à l'extérieur.

De préférence, la partie du système catalytique soumise à la force de fermeture électromagnétique induite par l'aimant comporte au moins la première pièce et/ou le catalyseur.

Notamment, la première pièce peut comporter, de préférence consister en, un matériau ferromagnétique, notamment en acier ou en fer doux.

La plus courte distance entre la première pièce et l'aimant peut être inférieure à 10 mm, voire inférieure à 5 mm. On assure ainsi que la première pièce et l'aimant s'attirent sous l'effet de l'aimantation de l'aimant.

La deuxième pièce peut être disposé entre la première pièce et le barreau, notamment l'aimant.

De préférence, la deuxième pièce est comprimée entre la première pièce et l'aimant dans la position fermée.

La deuxième pièce peut être au contact de la première pièce et de l'aimant dans la position fermée.

La deuxième pièce est de préférence en un matériau plastique, par exemple thermodurcissable. Ainsi, elle n'interagit pas sur l'interaction électromagnétique entre l'aimant et la première pièce.

Le catalyseur peut être en un matériau ferromagnétique. Il peut être attiré magnétiquement par l'aimant.

De préférence, le catalyseur est un métal, de préférence adapté à catalyser l'hydrolyse d'une solution à base d'hydrure ou d'un liquide organique porteur d'hydrogène. Un catalyseur particulièrement préféré est choisi parmi le cobalt, le nickel, le platine, le ruthénium et leurs alliages. En particulier, le catalyseur peut être en acier.

Le catalyseur peut être fixé sur la première pièce et/ou sur la deuxième pièce.

Dans un mode de réalisation particulier, la première pièce peut être en un matériau amagnétique ou en un matériau paramagnétique et le catalyseur comporte, voire consiste en, un matériau ferromagnétique. De préférence alors, le catalyseur est fixé sur la première pièce.

La bobine peut avoir une forme générale annulaire et notamment torique.

La bobine peut être formée d'au moins un fil métallique, par exemple en cuivre, revêtu d'un isolant électrique, par exemple une résine, et enroulé en de multiples enroulements autour d'un support d'enroulement qui peut guider le barreau.

La bobine peut être fixe par rapport à la première pièce.

La bobine peut comporter un évidement dans lequel le barreau, et ntotamment le noyau, est logé et est mobile en translation, par exemple selon une direction longitudinale.

Au moins dans la position fermée, l'aimant est de préférence situé à distance la bobine, selon la direction longitudinale. Il est de préférence logé hors de l'évidement.

De préférence, la bobine et le barreau, et notamment le noyau, sont agencées de telle sorte que la bobine guide le déplacement du barreau entre les positions ouverte et fermée du système catalytique.

Le barreau est de préférence distant du support d'enroulement dans les positions ouverte et fermée. Ainsi, il ne frotte pas sur la bobine, ce qui facilite l'ouverture et la fermeture du système catalytique. La distance séparant le noyau et la bobine, mesurée selon une direction normale à la direction de déplacement du noyau relativement à la bobine, peut être comprise entre 0,1 mm et 2,0 mm.

Le barreau peut être, de préférence intégralement revêtu d'une matière plastique. La corrosion du barreau par une solution d'hydrure peut ainsi être limitée.

De préférence, le dispositif comporte un boîtier, la première pièce étant fixée rigidement sur le boîtier, la première pièce et le boîtier formant une cage dans laquelle la bobine est emprisonnée. La bobine peut notamment être fixée sur le boîtier.

Le boîtier peut être en acier ou fer doux.

La deuxième pièce est de préférence logée dans le boîtier.

Le boîtier peut guider le mouvement de la deuxième pièce entre la position ouverte et la position fermée.

Comme décrit ci-dessus, le barreau est fixé, de préférence rigidement, sur le système catalytique. Dans le mode de réalisation selon lequel le dispositif comporte des première et deuxième pièce, le barreau est fixé sur la deuxième pièce.

De préférence, l'aimant est fixé sur la deuxième pièce. Il peut être collé et/ou vissé sur la deuxième pièce.

L'aimant peut être en un alliage NdFeB de formule Nd₂Fe₁₄B, en SmCo, AINiCo ou en un ferrite dur comme le ferrite de strontium.

L'aimant est de préférence fixé sur le noyau. De préférence, l'aimant est fixé à une extrémité longitudinale du noyau. Il est par exemple collé et/ou vissé sur le noyau.

De préférence, le noyau est en un matériau ferromagnétique. Ainsi, le noyau augmente l'induction magnétique générée par la bobine.

Dans une variante préférée, le noyau comporte un autre aimant.

L'autre aimant peut être fixé, notamment vissé et/ou collé, sur le noyau. De préférence les pôles de même polarité de l'aimant et de l'autre aimant sont disposés en regard l'un de l'autre. De préférence, l'autre aimant est fixé à l'extrémité longitudinale du noyau opposée à l'extrémité longitudinale sur laquelle l'aimant est fixé. Le barreau est ainsi pris en sandwich entre les aimants. La compacité du dispositif est ainsi augmentée, cette configuration permettant de produire un champ électromagnétique de plus haute intensité tout en réduisant le nombre d'enroulement de fil dans la bobine.

Le dispositif peut comporter un ressort pour appliquer une force élastique sur le système catalytique.

Le ressort peut appliquer une force élastique sur le système catalytique dans la position ouverte et/ou dans la position fermée du système catalytique.

Le ressort est de préférence comprimé par le système catalytique dans la position ouverte, et optionnellement dans la position fermée.

Le ressort peut appliquer une force élastique de fermeture sur le système catalytique pour maintenir le système catalytique en position fermée en l'absence du passage du courant électrique dans la bobine, en particulier en l'absence d'interaction magnétique entre l'aimant et le système catalytique.

Le ressort et l'aimant peuvent appliquer conjointement respectivement une force élastique de fermeture et une force électromagnétique de fermeture sur le système catalytique de manière à maintenir le système catalytique en position fermée lorsque la bobine est électriquement inactive. Le ressort renforce ainsi le maintien de la chambre catalytique en position fermée résultant de la force magnétique.

Au moyen du ressort, le dispositif peut être disposé selon plusieurs positions ouvertes, différentes l'une de l'autre. Les dimensions et/ou formes de la ou des ouvertures accessibles au liquide pour accéder à la chambre de catalyse dans les première et deuxième positions ouvertes sont de préférence différentes. De cette façon, la cinétique de génération de gaz peut être modifiée en déplaçant le dispositif catalytique entre deux positions ouvertes différentes. Le déplacement du barreau entre la position fermée et l'une des positions ouvertes résulte de l'équilibre des efforts qui sont appliqués au barreau, et notamment de la force électromagnétique induite par la bobine et de la force élastique induite par le ressort. Par adaptation de l'intensité électrique parcourant la bobine, le système catalytique peut être disposé selon différentes positions ouvertes. Le ressort peut être disposé de façon à appliquer la force élastique de fermeture sur la deuxième pièce.

Le ressort peut être logé entre la bobine et le système catalytique, de préférence la deuxième pièce.

Le ressort peut être comprimé dans les positions ouverte et fermée.

Le ressort peut être hélicoïdal ou à lame.

Le barreau peut être logé dans le ressort.

Par ailleurs, il est généralement requis qu'un générateur de gaz soit opérant quelle que soit l'orientation selon laquelle il est disposé. Or, dans le cas, de la génération de dihydrogène, la solution aqueuse d'hydrure comporte généralement du borohydrure de sodium NaBH₄, dont la réaction catalysée génère du métaborate de sodium NaBO₂, en consommant l'eau de la solution. Le volume et la densité de la solution aqueuse d'hydrure sont ainsi réduit et augmentée respectivement. Pour maintenir un rendement de production de dihydrogène suffisant, il peut être nécessaire d'ajouter de l'eau dans l'enceinte au fur et à mesure des périodes de génération de gaz successives. Par exemple, pour assurer une immersion permanente quelle que soit l'orientation de l'appareil, les systèmes catalytiques de WO 2012/003112 A1 et de WO 2010/051557 A1 sont ainsi contraints à être fixés rigidement à la paroi de l'appareil et à être disposés sensiblement au centre de l'enceinte.

De préférence, le dispositif selon l'invention comporte une bouée conformée pour que, lorsque le dispositif est mis en contact avec un liquide présentant une densité supérieure à 0,6 et, de préférence inférieure à 6, la bouée flotte sur le liquide et le système catalytique est au moins partiellement, de préférence intégralement, immergé dans le liquide.

Ainsi, quelle que soit l'orientation d'un générateur de gaz comportant le dispositif, le gaz peut être généré, le liquide pouvant pénétrer dans la chambre de catalyse dans la position ouverte du système catalytique.

Le système électromagnétique peut être disposé entre la bouée et le système catalytique. La densité de la bouée de flottaison est de préférence inférieure à la densité du système catalytique et/ou du système électromagnétique.

De préférence, la bouée présente une densité inférieure à 0,6. Elle peut être en un polymère, par exemple en polystyrène expansé.

De préférence, le système électromagnétique peut être disposé entre la bouée et le système catalytique, pour favoriser l'immersion du système catalytique dans le liquide.

De préférence, la bouée est fixée sur le boîtier. Par exemple, elle est emmanchée sur la paroi latérale du boîtier et/ou est fixée sur la paroi de fond du boîtier.

Par ailleurs, le dispositif peut comporter une batterie électriquement connectée à la bobine. La batterie est de préférence logée dans une enveloppe étanche. Elle est par exemple rechargeable par induction. Le dispositif peut ainsi avantageusement être contenu dans un générateur de gaz de forme complexe.

La batterie est par exemple fixe par rapport à la première pièce et/ou par rapport à la bobine. Elle peut être fixée sur la première pièce ou disposée dans la cage.

La bobine peut comporter *n* enroulements de fils de cuivre et la batterie peut être apte à générer un courant *I* tel que le produit *n.I* soit inférieur à 1000 A.tours.

Le dispositif peut comporter un module de réception configuré pour recevoir un signal de commande et commander la génération d'un courant électrique par la batterie suite à la réception du signal de commande.

Le module de commande peut être configuré pour disposer le système catalytique dans plusieurs positions ouvertes différentes les unes des autres, dans la variante où le dispositif comporte le ressort.

Le dispositif peut présenter une forme générale tubulaire.

Par exemple, dans un exemple de réalisation, le dispositif peut présenter une longueur inférieure à 50 mm et/ou une hauteur inférieure à 30 mm et/ou une profondeur inférieure à 30 mm. La force de fermeture électromagnétique induite par l'aimant, pour fermer le système catalytique, est par exemple supérieure à 2,0 N. De préférence, la puissance du courant électrique appliqué sur la bobine est comprise entre 1 W et 10 W, notamment inférieure à 20 W.

Par ailleurs, l'invention concerne un générateur de gaz, le générateur comportant :
- une enceinte définissant un espace intérieur contenant un liquide, et
- un dispositif selon l'invention immergé, au moins partiellement, dans le liquide de telle sorte qu'en position ouverte, le liquide pénètre dans la chambre de catalyse et le gaz est généré par mise en contact du liquide avec le catalyseur.

Le liquide peut être choisi parmi une solution, de préférence aqueuse, d'hydrure et un liquide organique porteur d'hydrogène.

La solution aqueuse d'hydrure peut comporter au moins un hydrure choisi parmi le borohydrure de potassium, le borohydrure de sodium, le borohydrure de magnésium, le borohydrure de calcium, le borohydrure de lithium, l'hydrure de lithium aluminium, l'hydrure de magnésium, l'hydrure de sodium aluminium et leurs mélanges. Elle peut en outre comporter un agent ou un mélange d'agents alcalins pour limiter la décomposition spontanée de l'hydrure chimique, notamment de l'hydroxyde de potassium et/ou de l'hydroxyde de sodium.

Un « liquide organique porteur d'hydrogène » est aussi connu sous la dénomination LOHC (acronyme anglais de « Liquid Organic Hydrogen Carrier »). Il est formé d'un couple d'un composé A riche en hydrogène et d'un composé B pauvre en hydrogène, noté A/B. Le LOHC peut être choisi parmi le toluene/methylcyclohexane, le Naphthalene/ Decalin, le dibenzyltoluène (H0-DBT)/perhydro-dibenzyltoluène (H18-DBT), le N-éthylcarbazole (H0-NEC)/dodécahydro-N-éthylcarbazole (H12-NEC), et leurs mélanges. Le LOHC peut être tout composé permettant le cyclage liquide/liquide entre une molécule riche en H₂ et une molécule pauvre en H₂.

Le dispositif peut être immergé partiellement seulement dans le liquide. De préférence, le système catalytique est totalement immergé dans le liquide, quelle que soit l'orientation du générateur.

Le système électromagnétique peut être immergé, par exemple intégralement, dans le liquide.

De préférence, le dispositif comporte une bouée telle que décrite, la bouée flottant sur le liquide et maintenant le système catalytique immergé, de préférence totalement, dans le liquide.

En particulier, le dispositif est mobile par rapport à l'enceinte. Le dispositif peut être librement mobile par rapport à l'enceinte. Notamment, il peut être exempt de moyens de liaison électrique ou de moyen de liaison mécanique avec l'enceinte.

Le générateur de gaz peut comporter une batterie, reliée électriquement à la bobine.

Le générateur de gaz peut comporter des câbles électriques, notamment immergés dans le liquide, connectant la batterie à la bobine.

Le générateur de gaz peut comporter un module de commande configuré pour émettre un signal de commande pour déclencher l'alimentation de la bobine en courant électrique par la batterie.

L'invention concerne aussi un procédé de génération d'un gaz, procédé comportant les étapes successives de :
a) fourniture d'un générateur selon l'invention ;
b) alimentation électrique de la bobine pour ouvrir la chambre de catalyse en déplaçant le barreau relativement à la bobine, de telle sorte que le liquide pénètre dans la chambre de catalyse et entre en contact avec le catalyseur.

Le procédé est de préférence mis en oeuvre pour générer du dihydrogène.

De préférence, on mesure une grandeur à réguler, l'ouverture ou la fermeture de la chambre de catalyse étant commandée lorsque la grandeur à réguler est inférieure à une valeur minimale ou supérieure à une valeur maximale.

En particulier, la grandeur à réguler peut être la pression du gaz dans l'enceinte ou la température du gaz ou la température de la solution d'hydrure ou du liquide organique porteur d'hydrogène.

Selon un premier mode de mise en oeuvre, la grandeur à réguler peut être la pression dans l'enceinte et le liquide peut être une solution d'hydrure.

Selon un deuxième mode de mise en oeuvre, la grandeur à réguler peut être la température du gaz et le liquide peut être un liquide organique porteur d'hydrogène. La fermeture du système catalytique peut alors être commandée dès que la température du gaz dans l'enceinte atteint une température critique prédéterminée.

Le procédé peut comporter une étape c), postérieure à l'étape b), consistant à fermer le système catalytique en coupant l'alimentation électrique de la bobine.

### Brève description des figures

D'autres caractéristiques, variantes et avantages de l'invention ressortiront mieux à la lecture de la description détaillée et des exemples qui vont suivre, donnés à titre illustratif et non limitatif, et à l'examen du dessin annexé, sur lesquels :
[Fig 1] la figure 1 illustre, vue en coupe longitudinale, un exemple de générateur de gaz selon l'invention ;
[Fig 2] la figure 2 illustre un agrandissement du dispositif contenu dans le générateur de gaz illustré de la figure 1, dans la position fermée du système catalytique ;
[Fig 3] la figure 3 est une vue 3D éclatée du dispositif de la figure 2 ;
[Fig 4] la figure 4 illustre le dispositif de la figure 2, dans une position ouverte du système catalytique ;
[Fig 5] la figure 5 illustre une vue 3D du dispositif de la figure 2, dans une position ouverte du système catalytique ;
[Fig 6] la figure 6 illustre le dispositif de la figure 5, dans une position fermée du système catalytique ;
[Fig7] la figure 7 illustre un autre exemple de dispositif, vue en coupe longitudinale et dans une position ouverte du système catalytique ;
[Fig 8] la figure 8 illustre le dispositif de la figure 7 dans une position fermée du système catalytique ;
[Fig 9] la figure 9 illustre encore un autre exemple de dispositif, vue en coupe longitudinale et dans une position ouverte du système catalytique ;
[Fig 10] la figure 10 illustre le dispositif de la figure 9 dans une position fermée du système catalytique ;
[Fig 11] la figure 11 illustre un autre exemple de réalisation d'un générateur de gaz ;
[Fig 12] la figure 12 illustre le générateur de gaz de la figure 11 contenant un volume inférieur de liquide ; et
[Fig 13] la figure 13 illustre le générateur de gaz de la figure 11 orienté différemment par rapport à la direction de la gravité.

Dans les figures, les échelles et proportions des différents organes et unités constituant l'appareil et le dispositif ne sont pas nécessairement respectées. Par ailleurs, par souci de clarté, des organes peuvent être représentés comme n'étant pas au contact les uns des autres alors qu'ils le sont en pratique. Des références différentes peuvent désigner un même organe.

### Description détaillée

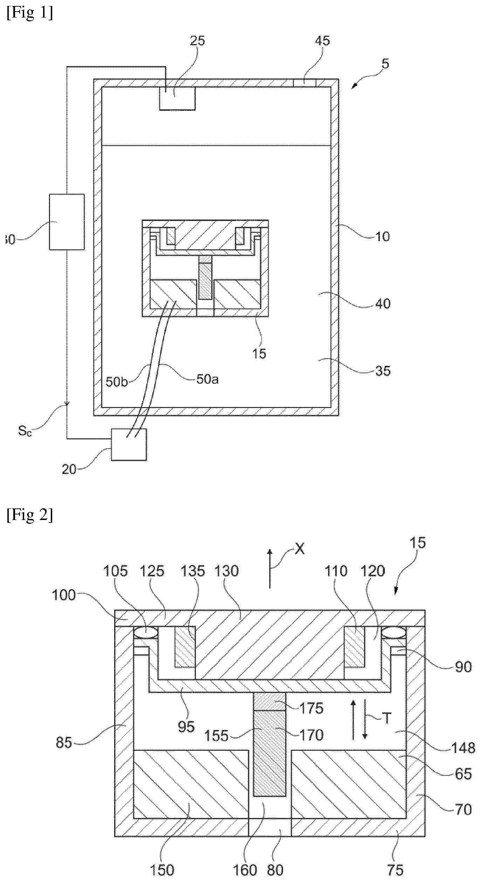

Un exemple de générateur 5 de gaz selon l'invention est illustré sur la figure 1. Le générateur de gaz comporte une enceinte 10, un dispositif 15, une batterie 20, un module de mesure 25 et un module de commande 30.

L'enceinte définit un espace intérieur 35 contenant un liquide 40 apte à réagir au contact d'un catalyseur pour générer le gaz. Le liquide est par exemple une solution aqueuse d'hydrure ou un liquide organique porteur d'hydrogène, qui peut par réaction avec un catalyseur générer du dihydrogène.

L'enceinte comporte un évent 45, pour évacuer le gaz généré dans l'espace intérieur, par exemple vers une pile à combustible, non représentée.

La batterie 20 est disposée hors de l'enceinte. D'autres agencements de la batterie peuvent être envisagés, comme cela apparaitra ci-après. La batterie est reliée électriquement au dispositif, par l'intermédiaire de câbles 50a-b conducteurs et souples immergés dans le liquide.

Le module de mesure 25 est configuré pour mesurer une grandeur à contrôler. Il est relié, par exemple électriquement, au module de commande auquel il transmet la valeur mesurée de la grandeur à contrôler. Par exemple, le module de mesure contient un capteur mesurant la pression du gaz dans l'enceinte.

Le module de contrôle analyse la valeur de la grandeur à contrôler, et en fonction du résultat de la mesure, peut générer et transmettre un signal de commande S_{c} à la batterie pour déclencher ou couper l'alimentation électrique du dispositif.

Le dispositif est immergé dans le liquide.

Dans l'exemple de la figure 1, le dispositif est fixé sur la paroi de l'enceinte et est disposé sensiblement au centre de l'enceinte. Toutefois, un tel agencement, de réalisation simple, n'est pas limitatif. Comme cela sera décrit par la suite, d'autres variantes d'agencement avantageuses peuvent être envisagées.

Le dispositif présente une forme générale tubulaire et cylindrique de révolution autour d'un axe X longitudinal.

Il comporte un système catalytique 60, un système électromagnétique 65 et un boîtier 70. Le boîtier présente une forme générale tubulaire et creuse. Il comporte une paroi de fond 75 traversée par un trou 80 central et de laquelle s'étend une paroi latérale 85 dans laquelle des fenêtres 90 sont ménagées.

Le système catalytique comporte une première pièce 100, une deuxième pièce 95, un joint d'étanchéité 105 et un catalyseur 110.

Dans la configuration illustrée sur les figures 1, 2 et 6, le système catalytique est disposé en position fermée. La première pièce obture l'ouverture supérieure 115 définie par la deuxième pièce. La première pièce et la deuxième pièce définissent ainsi une chambre de catalyse 120 close.

Le catalyseur 110, par exemple à base de platine et/ou de ruthénium, est logé dans la chambre de catalyse. Il est de forme annulaire et est fixé sur la première pièce. La première pièce présente une paroi 125 disposée en regard de la chambre de catalyse, de laquelle une portion en saillie 130 s'étend selon la direction longitudinale. La portion en saillie présente un contour latéral 135 de forme complémentaire de la forme du catalyseur. Le catalyseur est ainsi emmanché et fixé sur la première pièce, comme illustré sur la figure 1.

Selon une variante non illustrée, le catalyseur peut être porté par la deuxième pièce, par exemple fixé rigidement sur le fond de la deuxième pièce. Selon encore une autre variante, le catalyseur peut se présenter sous la forme de deux blocs, par exemple annulaires, portés respectivement par la première pièce et par la deuxième pièce.

La deuxième pièce présente un fond 140 et une paroi latérale 145 s'étendant longitudinalement depuis le fond. Le joint d'étanchéité 105, par exemple en un matériau élastomère, est monté sur une face d'extrémité longitudinale de la paroi latérale de la deuxième pièce.

Dans la position fermée, les première et deuxième pièces prennent en sandwich et compriment le joint d'étanchéité. Ils assurent ainsi l'étanchéité au liquide et au gaz, de la chambre de catalyse. Ainsi, dans la position fermée du système catalytique, le liquide contenu dans l'enceinte ne peut pénétrer dans la chambre de catalyse. Aucun gaz n'est alors généré.

Par ailleurs, la première pièce 100 est montée, par exemple vissée sur le boîtier 70. Le boîtier et la première pièce définissent ensemble une cage 148 dans laquelle le système électromagnétique est logé.

Les première et deuxième pièces sont mobiles en translation l'un par rapport l'autre selon la direction longitudinale, comme indiqué par les flèches T. Le mouvement de la deuxième pièce par rapport à la première pièce est guidé par le système électromagnétique auquel la deuxième pièce est reliée.

Le système électromagnétique 65 comporte une bobine 150 s'étendant autour de l'axe longitudinal et un barreau 155.

La bobine comporte un support d'enroulement autour duquel est enroulé un fil de cuivre. La bobine comporte un évidement 160 au travers duquel le barreau est mobile en translation selon l'axe longitudinal comme illustré par les flèches T.

Dans l'exemple illustré, la bobine présente une forme torique, et ceinture entièrement le barreau. Une forme torique n'est toutefois pas limitative. En variante, la bobine peut présenter une forme plus généralement annulaire.

La bobine est logée dans la cage entre les parois latérale et de fond du boîtier et le système catalytique. La bobine est fixée sur le boîtier, par exemple encliquetée contre la paroi latérale ou collée sur la paroi de fond. Elle est ainsi fixe par rapport à la première pièce.

Par ailleurs, le barreau comporte un noyau 170 et un aimant 175 fixé à une extrémité longitudinale du noyau. Dans l'exemple de la figure 1, le noyau est cylindrique de révolution, mais d'autres formes peuvent être envisagées.

Le noyau est de préférence en un matériau ferromagnétique et l'aimant est fixé au noyau. Dans une variante, le noyau peut être en un matériau amagnétique ou paramagnétique. Dans la configuration fermée, l'aimant est disposé à distance de la bobine selon la direction longitudinale. Il est notamment fixé hors de l'évidement central.

Le barreau 155 est fixé rigidement sur la deuxième pièce 95.

Dans l'exemple illustré, la deuxième pièce est en un matériau plastique.

La première pièce est en un matériau ferromagnétique. Ainsi, elle est soumise à une force électromagnétique induite par l'aimant qui tend à l'attirer contre l'aimant.

En l'absence d'un courant électrique parcourant la bobine, l'attraction entre la première pièce et l'aimant maintient le système catalytique dans la position fermée.

La bobine 150, lorsqu'elle est parcourue par un courant électrique en provenance de la batterie 20, génère un champ électromagnétique qui attire l'aimant vers la bobine. L'intensité du champ magnétique est telle que la force d'attraction générée par la bobine sur l'aimant est, en valeur absolue, supérieure à la force électromagnétique d'attraction entre l'aimant et le système catalytique. L'aimant est alors translaté par rapport à la bobine selon la direction longitudinale en direction de la bobine, comme indiqué par les flèches T, et entraîne avec lui la deuxième pièce dans un mouvement de corps rigide.

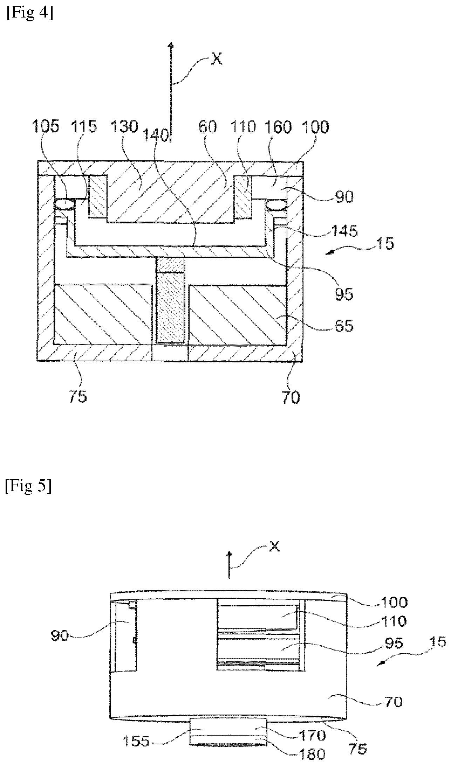

La bobine étant fixe par rapport à la première pièce, il en résulte que la deuxième pièce est alors éloignée de la première pièce. Le système catalytique est alors disposé en position ouverte, comme cela peut être observé sur les figures 4 et 5. Le liquide 40 contenu dans l'enceinte traverse alors les fenêtres 90 du boîtier et pénètre dans la chambre de catalyse par l'ouverture 178 définie par le déplacement relatif de la deuxième pièce par rapport à la première pièce et peut entrer en contact avec le catalyseur. Le gaz est alors généré.

La pression de gaz dans l'enceinte augmente alors au fur et à mesure que la réaction catalytique s'opère et est mesurée par le module de mesure. Lorsque la pression de gaz dans l'enceinte atteint une pression maximale, le module de commande génère et transmet un signal de commande pour couper l'alimentation en courant électrique de la bobine. La bobine ne génère alors plus de champ électromagnétique.

La force magnétique induite par l'aimant, à laquelle est soumise la première pièce, est alors telle que la première pièce est attirée par l'aimant et est déplacée selon la direction longitudinale jusqu'à ce que le système catalytique soit disposé dans la position fermée. Le dispositif illustré sur la figure 1 est ainsi particulièrement compact, et occupe un volume restreint dans l'espace intérieur. L'enceinte peut avantageusement contenir un volume élevé de liquide.

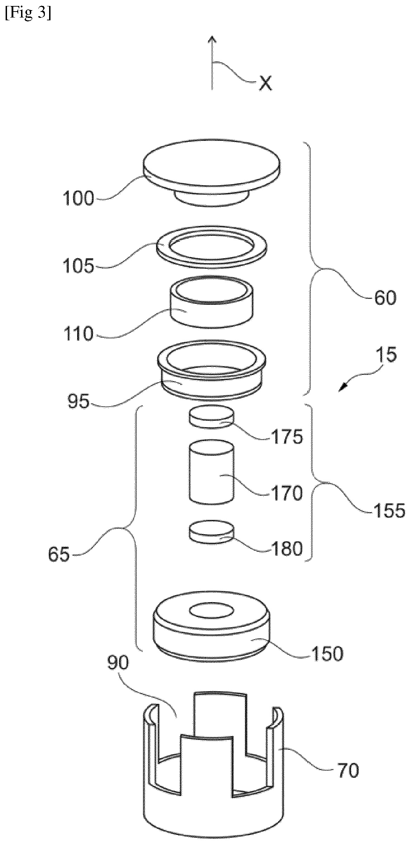

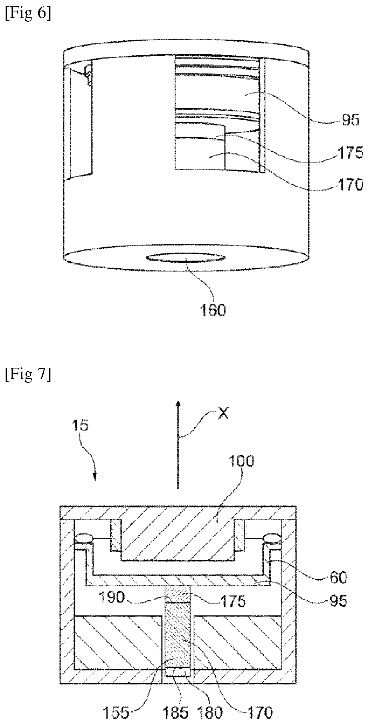

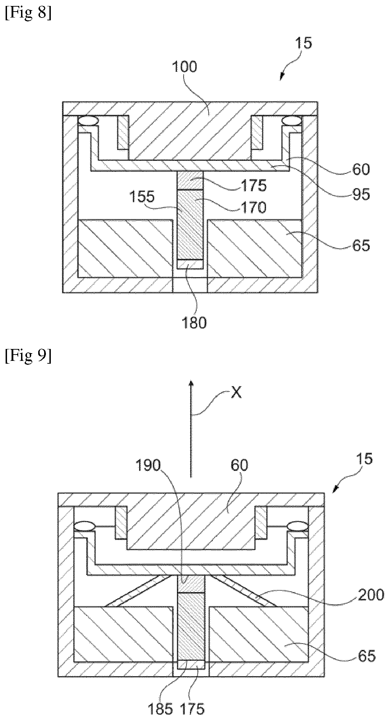

Le dispositif 15 illustré sur les figures 7 et 8 diffère du dispositif illustré sur les figures 1 à 6 en ce que le barreau 155 comporte un autre aimant 180.

L'autre aimant est monté sur l'extrémité longitudinale 185 du noyau opposée à celle 190 sur laquelle est fixé l'aimant.

Les pôles de même polarité des deux aimants sont disposés l'un en face de l'autre, le long de la direction longitudinale.

Lorsque la bobine est alimentée par un courant électrique, les deux aimants sont tous deux soumis à une force électromagnétique qui les entraîne vers la position ouverte du système catalytique. Il est ainsi possible de réduire la taille de la bobine en réduisant le nombre d'enroulement du fil métalliques, par exemple d'au moins un facteur 2 par rapport au dispositif des figures 1 à 6, tout en assurant un effort de maintien du système catalytique en position fermée sensiblement identique. On améliore ainsi la compacité du dispositif, ainsi que l'efficacité énergétique du dispositif. Un tel dispositif est particulièrement préféré.

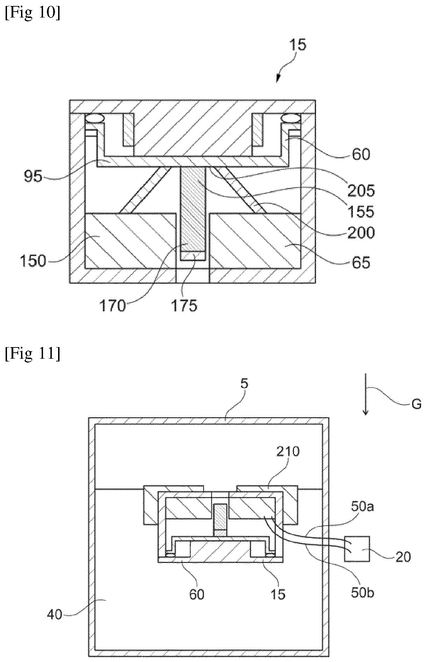

Le dispositif 15 des figures 9 et 10 diffère du dispositif illustré sur les figures 1 à 6 notamment ce que le dispositif comporte un ressort 200, en ce que le noyau 170 est en contact par son extrémité longitudinale 190 et fixé sur la deuxième pièce 95, et en ce que l'aimant 175 est fixé sur l'extrémité opposée 185.

Le ressort 200 est pris en sandwich entre la bobine 150 et la deuxième pièce 95, contre lesquels il est en appui.

Dans l'exemple illustré, le ressort est une rondelle Belleville, comportant un évidement 205 central, dans lequel le barreau est engagé et est mobile. En variante, le ressort peut être hélicoïdal.

Dans les positions ouverte et fermée du dispositif, le ressort est comprimé. L'énergie élastique emmagasinée dans le ressort est plus élevée dans la position ouverte que dans la position fermée.

Dans l'exemple illustré, les première et deuxième pièces et le catalyseur sont en matériau amagnétique, par exemple en un matériau plastique. Aucune force d'attraction n'est générée par l'aimant dans le système catalytique, dans la position fermée et dans la position ouverte. Lorsque la batterie délivre un courant électrique dans la bobine, l'aimant est attiré vers la bobine par le courant électrique qu'elle génère. La bobine est configurée pour que la force électromagnétique générée par le passage du courant soit en valeur absolue supérieure à la force de compression élastique dans le ressort en position fermée.

La deuxième pièce est alors déplacée vers la bobine, ouvrant ainsi la chambre de catalyse. Le mouvement de la deuxième pièce est arrêté lorsque la force d'attraction dans l'aimant compense la force de compression élastique du ressort.

Lorsque l'alimentation de la bobine en courant électrique est coupée, le ressort se détend et provoque le déplacement de la deuxième pièce contre la première pièce jusqu' à la fermeture du système catalytique. Le système catalytique est alors soumis à une force de fermeture élastique générée par le ressort en compression.

Un tel dispositif est avantageux. Par exemple, il peut être destiné à entrer en contact avec des liquides corrosifs vis-à-vis de métaux ferromagnétiques, tels que l'acier. Par exemple, les organes constitutifs du dispositif, hormis la bobine, l'aimant et le catalyseur peuvent être en un polymère, par exemple un thermoplastique.

Par ailleurs, le dispositif peut comporter un autre aimant, comme illustré sur les figures 7 et 8.

Dans une autre variante du dispositif illustré sur les figures 9 et 10, la première pièce est en un matériau ferromagnétique. L'aimant et la première pièce sont alors attirés l'un vers l'autre sous l'effet de la force magnétique induite par l'aimant.

Selon un premier exemple, dans la position fermée, le ressort peut être à l'équilibre, c'est-à-dire qu'il ne stocke pas d'énergie élastique. Il n'applique pas de force supplémentaire sur le système catalytique pour maintenir la chambre de catalyse dans la position fermée. Selon un deuxième exemple, le ressort peut être comprimé, et applique une force supplémentaire sur le système catalytique.

Les figures 11 à 13 illustrent un générateur de gaz 5 comportant un dispositif tel que représenté sur la figure 2. Le dispositif comporte en outre une bouée 210, montée sur le boîtier.

Le dispositif est relié électriquement à une batterie 20 par l'intermédiaire de câbles électriques 50a-b souples.

Le dispositif est librement mobile dans l'espace intérieur. Les câbles électriques n'entravent pas le déplacement du dispositif par rapport à l'enceinte.

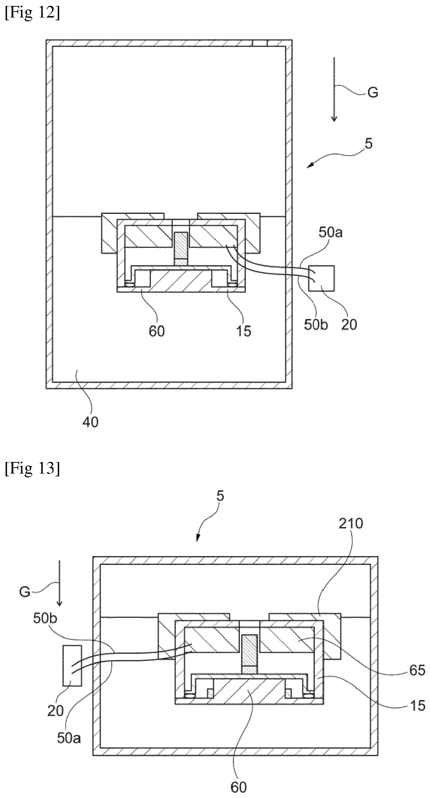

La bouée flotte sur le liquide et maintient le système catalytique 60 totalement immergé dans le liquide, que le volume de liquide contenu dans la deuxième pièce soit élevé, comme illustré sur la figure 11, ou faible comme illustré sur la figure 12. De même, comme cela est illustré sur la figure 13, lorsque l'enceinte est disposée selon une orientation différente, par exemple à 90° par rapport à la direction de la gravité G, le système catalytique est maintenu en immersion totale dans le liquide. Le débit de gaz généré est optimal quelle que soit la configuration illustrée sur les figures 11 à 13.

Par ailleurs, dans l'exemple illustré, le système électromagnétique 65 est totalement immergé dans le liquide. Dans une variante non illustrée, il peut être disposé hors du liquide.

### Exemples

### Dimensionnement de la bobine

A titre illustratif, pour assurer un fonctionnement du dispositif électriquement peu consommateur, il est requis que la consommation énergétique du système électromagnétique soit au maximum de 20 W. Il est en outre requis selon l'exemple que la bobine génère sur l'aimant une force supérieure à la force appliquée par l'aimant sur la première pièce dans la position fermée qui est supérieure à 2 N,

La bobine comporte n enroulement d'un fil de cuivre.

La longueur totale du fil de cuivre est *L*=*n.lₜ* avec *lₜ* la longueur d'un enroulement.

La section du bobinage *Sb* est obtenue à partir de la section du fil de cuivre, du taux de foisonnement *f* et du nombre d'enroulement *Sb*=*S.nlf.*

La résistance *R* de la bobine est exprimée comme *R*=*n²lₜ.ρ*/(*Sb.f*), *ρ* étant la résistivité électrique du cuivre égale à 1,7.10⁻⁸ Ω.cm.

La puissance *P* est alors exprimée comme *P*=*RI²*= *(n.I*)²*.lt.ρ*/(*Sb.f).*

L'homme du métier sait que l'intensité du champ magnétique produit par la bobine est dépendant du produit *n.I* du nombre *n* d'enroulements par le courant *I* circulant dans la bobine.

### Exemple 1

Dans un premier exemple tel qu'illustré sur les figures 7 et 8, le dispositif présente une forme générale tubulaire, d'une hauteur égale à 50 mm et d'un diamètre égal à 30 mm.

L'aimant applique un effort de fermeture sur le système catalytique de l'ordre de 2,5 N. Il est constitué de NdFeB et présente une forme de pastille cylindrique de révolution de 10 mm de diamètre et 2 mm de hauteur.

La première pièce est en acier ou en fer doux

Dans la position fermée, la portion en saillie est disposée à 2 mm de l'aimant, la distance étant mesurée selon la direction longitudinale.

Le noyau est en fer ou en acier doux et présente une longueur égale à 13 mm et un diamètre égal à 10 mm.

La bobine comporte un circuit magnétique formé d'une tôle d'acier de 1 mm d'épaisseur. Le circuit magnétique canalise le flux magnétique produit par la bobine.

La bobine présente une forme torique de diamètre intérieur et extérieur égaux à 12 mm et 30 mm respectivement, ce qui correspond à une surface de bobinage de 90 mm² et une longueur d'un enroulement de 65 mm. Le barreau de diamètre égal à 10 mm est ainsi à distance de la bobine lorsqu'il est engagé dans la bobine.

L'ouverture du système catalytique nécessite que la bobine présente un produit *n.I* de l'ordre de 500 A.tours. L'homme du métier sait déterminer ce produit aisément en fonction de la tension électrique *U* aux bornes de la bobine qui s'exprime comme *U*=*lt.ρ*/(*Sb.f).n².I.* Il sait aussi déterminer le diamètre *D* du fil à partir de la relation *D*=*(4.Sb.f*/*π.n)^{0,5}.*

Par exemple, sous une tension *U* égale à 5 V, le nombre *n* de tours est égal à 400, le courant *I* parcourant la bobine est de 1,3 A, le diamètre *D* du fil de la bobine est égal à 0,38 mm et la puissance *P* dissipée pour ouvrir la chambre de catalyse est de 6 W.

La course du noyau est de 4 mm. Le déplacement entre la position extrêmale d'ouverture et de la position de fermeture s'effectue en 10 ms environ.

### Exemple 2

Dans un deuxième exemple tel qu'illustré sur les figures 7 et 8, le dispositif présente une forme générale tubulaire, d'une hauteur égale à 50 mm et d'un diamètre égal à 30 mm. L'aimant applique un effort de fermeture sur le système catalytique de l'ordre de 2,5 N. Il est constitué de ferrite et présente une forme de pastille cylindrique de révolution de 20 mm de diamètre et 5 mm de hauteur.

Le noyau est en fer ou en acier doux et présente une longueur égale à 7 mm et un diamètre égal à 20 mm.

Dans la position fermée, la portion en saillie de la deuxième pièce est disposée à 2 mm de l'aimant, la distance étant mesurée selon la direction longitudinale.

La bobine comporte un circuit magnétique formé d'une tôle d'acier de 1 mm d'épaisseur. La bobine présente une forme torique de diamètre intérieur et extérieur égaux à 22 mm et 32 mm respectivement et la hauteur du tore est de 10 mm, ce qui correspond à une surface de bobinage de 50 mm² et une longueur d'un enroulement de 85 mm.

L'ouverture du système catalytique nécessite que la bobine présente un produit *n.I* de l'ordre de 200 A.tours.

Par exemple, sous une tension *U* égale à 5 V, le nombre *n* de tours est égal à 430, le courant *I* est de 0,5 A, le diamètre *D* du fil de la bobine est égal à 0,27 mm et la puissance *P* dissipée pour ouvrir la chambre de catalyse est de 2,5 W.

La course du noyau est supérieure à 5 mm. Le déplacement entre la position extrêmale d'ouverture et de la position de fermeture s'effectue en 20 ms environ.

Comme cela apparaît clairement tout au long de la présente description, la génération de gaz, notamment de dihydrogène, au moyen d'un générateur comportant le dispositif selon l'invention peut aisément être adaptée en fonction de l'application à laquelle le gaz généré est destiné. En outre, le dispositif est particulièrement compact et sa mise en oeuvre est énergétiquement peu consommatrice.

Bien entendu, l'invention n'est pas limitée aux modes de réalisation du dispositif et du générateur de gaz selon l'invention ainsi qu'aux modes de mise en oeuvre du procédé décrits et représentés.

## Revendications

1. Dispositif (15) comportant un système catalytique (60) et un système électromagnétique (65),
le système catalytique définissant une chambre de catalyse (120) et comportant un catalyseur (110) d'une réaction de génération d'un gaz à partir d'un liquide (40), le catalyseur étant logé dans la chambre de catalyse,
le système électromagnétique comportant une bobine (150) et un barreau (155) mobile par rapport à la bobine, le barreau étant fixé sur le système catalytique et comportant un aimant (175) et un noyau (170),
le système électromagnétique étant configuré pour déplacer le barreau par rapport à la bobine lors du passage d'un courant électrique dans la bobine, de manière à disposer le système catalytique selon une position ouverte, dans laquelle la chambre de catalyse est en communication fluidique avec l'extérieur,
le système catalytique étant disposé selon une position fermée dans laquelle la chambre de catalyse est hermétiquement close, en l'absence de courant électrique parcourant la bobine.

2. Dispositif selon la revendication 1, au moins une partie du système catalytique étant soumis à une force de fermeture électromagnétique, induite par l'aimant, qui maintient le système catalytique dans la position fermée, en l'absence de courant électrique parcourant la bobine.

3. Dispositif selon l'une quelconque des revendications 1 et 2, le système catalytique comportant une première pièce (100) et une deuxième pièce (95) fixée rigidement au barreau, les première et deuxième pièces définissant ensemble la chambre de catalyse et étant mobiles l'une par rapport à l'autre entre les positions ouverte et fermée..

4. Dispositif selon les revendications 2 et 3, ladite partie du système catalytique comportant au moins la première pièce et/ou le catalyseur.

5. Dispositif selon l'une quelconque des revendications 3 et 4, la deuxième pièce étant comprimée entre la première pièce et le barreau dans la position fermée.

6. Dispositif selon l'une quelconque des revendications 3 à 5, comportant un boîtier (70), la première pièce étant fixée rigidement sur le boîtier, la première pièce et le boîtier formant une cage dans laquelle la bobine est emprisonnée.

7. Dispositif selon l'une quelconque des revendications précédentes, l'aimant étant fixé à une extrémité longitudinale (190) du noyau, de préférence, le barreau comportant un autre aimant (180) fixé à l'extrémité longitudinale (185) du noyau opposée à l'extrémité longitudinale (190) sur laquelle l'aimant (175) est fixé, les pôles de même polarité de l'aimant et de l'autre aimant étant disposés en regard l'un de l'autre.

8. Dispositif selon l'une quelconque des revendications précédentes, comportant un ressort (200) pour appliquer une force élastique sur le système catalytique.

9. Dispositif selon la revendication précédente, le ressort étant comprimé par le système catalytique dans la position ouverte, et optionnellement dans la position fermée.

10. Dispositif selon l'une quelconque des revendications 8 et 9, le ressort appliquant une force élastique de fermeture sur le système catalytique pour maintenir le système catalytique en position fermée en l'absence du passage du courant électrique dans la bobine, en particulier en l'absence d'attraction magnétique entre l'aimant et le système catalytique, de préférence, le ressort étant logé entre la bobine et le système catalytique.

11. Dispositif selon l'une quelconque des revendications précédentes, comportant une bouée (210) conformée pour que, lorsque le dispositif est mis en contact avec un liquide présentant une densité supérieure à 0,6, la bouée flotte sur le liquide et le système catalytique est au moins partiellement, de préférence intégralement, immergé dans le liquide.

12. Générateur (5) de gaz, le générateur comportant :
- une enceinte (10) définissant un espace intérieur (35) contenant un liquide (40),
- un dispositif (5) selon l'une quelconque des revendications précédentes immergé, au moins partiellement, dans le liquide de telle sorte qu'en position ouverte, le liquide pénètre dans la chambre de catalyse (120) et le gaz est généré par mise en contact du liquide avec le catalyseur.

13. Générateur de gaz selon la revendication précédente, le liquide étant choisi parmi une solution, de préférence aqueuse, d'hydrure et un liquide organique porteur d'hydrogène.

14. Générateur de gaz selon l'une quelconque des revendications 12 et 13, le dispositif étant librement mobile dans l'enceinte.

15. Procédé de génération d'un gaz, de préférence du dihydrogène, procédé comportant les étapes successives de :
a) fourniture d'un générateur selon l'une quelconque des revendications 12 à 14 ;
b) alimentation électrique de la bobine (150) pour ouvrir la chambre de catalyse (120) en déplaçant le barreau relativement à la bobine, de telle sorte que le liquide pénètre dans la chambre de catalyse et entre en contact avec le catalyseur (110) ; et
c) optionnellement, fermeture du système catalytique en coupant l'alimentation électrique de la bobine.

## Patentansprüche

1. Vorrichtung (15), die ein katalytisches System (60) und ein elektromagnetisches System (65) aufweist,
wobei das katalytische System eine Katalysekammer (120) begrenzt und einen Katalysator (110) für eine Reaktion zur Erzeugung eines Gases ausgehend von einer Flüssigkeit (40) aufweist, wobei der Katalysator in der Katalysekammer aufgenommen ist,
wobei das elektromagnetische System eine Spule (150) und einen Stab (155) aufweist, welcher gegenüber der Spule beweglich ist, wobei der Stab an dem katalytischen System befestigt ist und er einen Magneten (175) und einen Kern (170) aufweist,
wobei das elektromagnetische System dafür ausgelegt ist, den Stab gegenüber der Spule zu bewegen, wenn die ein elektrischer Strom durch die Spule fließt, sodass das katalytische System gemäß einer offenen Position angeordnet wird, in welcher die Katalysekammer in Fluidverbindung mit dem Außenbereich steht,
wobei das katalytische System gemäß einer geschlossenen Position angeordnet ist, in welcher die Katalysekammer hermetisch geschlossen ist, wenn keinerlei elektrischer Strom durch die Spule fließt.

2. Vorrichtung nach Anspruch 1, wobei zumindest ein Abschnitt des katalytischen Systems einer elektromagnetischen Schließkraft unterworfen ist, welche von dem Magneten induziert wird, wobei sie das katalytische System in der geschlossenen Position hält, wenn keinerlei elektrischer Strom durch die Spule fließt.

3. Vorrichtung nach einem beliebigen der Ansprüche 1 und 2, wobei das katalytische System ein erstes Stück (100) und ein zweites Stück (95) aufweist, welches auf steife Weise an dem Stab befestigt ist, wobei das erste und das zweite Stück gemeinsam die Katalysekammer begrenzen und zwischen der offenen und der geschlossenen Position zueinander beweglich sind.

4. Vorrichtung nach den Ansprüchen 2 und 3, wobei der Abschnitt des katalytischen Systems zumindest das erste Stück und/oder den Katalysator aufweist.

5. Vorrichtung nach einem beliebigen der Ansprüche 3 und 4, wobei das zweite Stück in der geschlossenen Position zwischen dem ersten Stück und dem Stab komprimiert vorliegt.

6. Vorrichtung nach einem beliebigen der Ansprüche 3 bis 5, wobei sie ein Gehäuse (70) aufweist, wobei das erste Stück auf steife Weise an dem Gehäuse befestigt ist, wobei das erste Stück und das Gehäuse einen Käfig bilden, in welchem die Spule eingeschlossen ist.

7. Vorrichtung nach einem beliebigen der vorhergehenden Ansprüche, wobei der Magnet an einem längsgerichteten Ende (190) des Kerns befestigt ist, wobei der Stab vorzugsweise einen weiteren Magneten (180) aufweist, der am längsgerichteten Ende (185) des Kerns befestigt ist, welches dem längsgerichteten Ende (190) gegenüberliegt, an welchem der Magnet (175) befestigt ist, wobei die Pole der gleichen Polarität des Magneten und des anderen Magneten derart angeordnet sind, dass sie sich gegenüberliegen.

8. Vorrichtung nach einem beliebigen der vorhergehenden Ansprüche, wobei sie eine Feder (200) aufweist, um das katalytische System mit einer Federkraft zu beaufschlagen.

9. Vorrichtung nach dem vorhergehenden Anspruch, wobei die Feder in der offenen Position, und möglicherweise in der geschlossenen Position, von dem katalytischen System komprimiert wird.

10. Vorrichtung nach einem beliebigen der Ansprüche 8 und 9, wobei die Feder ein schließende Federkraft auf das katalytische System ausübt, um das katalytische System in der geschlossenen Position zu halten, wenn keinerlei elektrischer Strom durch die Spule fließt, insbesondere wenn keine magnetische Anziehung zwischen dem Magneten und dem katalytischen System besteht, wobei die Feder vorzugsweise zwischen der Spule und dem katalytischen System aufgenommen ist.

11. Vorrichtung nach einem beliebigen der vorhergehenden Ansprüche, wobei sie einen Schwimmkörper (210) aufweist, welcher derart ausgestaltet ist, dass der Schwimmkörper auf einer Flüssigkeit schwimmt und dass das katalytische System zumindest teilweise, vorzugsweise vollständig in die Flüssigkeit eingetaucht ist, wenn die Vorrichtung mit ebendieser Flüssigkeit in Kontakt gebracht wird, welche eine Dichte von mehr als 0,6 aufweist.

12. Gaserzeuger (5), wobei der Erzeuger Folgendes aufweist:
- einen Hohlraum (10), der einen Innenraum (35) begrenzt, welcher eine Flüssigkeit (40) enthält,
- eine Vorrichtung (5) nach einem beliebigen der vorhergehenden Ansprüche, wobei diese zumindest teilweise in die Flüssigkeit eingetaucht ist, sodass die Flüssigkeit in der offenen Position in die Katalysekammer (120) eindringt und das Gas erzeugt wird, indem die Flüssigkeit mit dem Katalysator in Kontakt gebracht wird.

13. Gaserzeuger nach dem vorhergehenden Anspruch, wobei die Flüssigkeit aus einer vorzugsweise wässrigen Lösung von Hydrid und einer wasserstofftragenden organischen Flüssigkeit ausgewählt ist.

14. Gaserzeuger nach einem beliebigen der Ansprüche 12 und 13, wobei die Vorrichtung in dem Hohlraum frei beweglich ist.

15. Verfahren zur Erzeugung eines Gases, vorzugsweise von Wasserstoff, wobei das Verfahren nacheinander die folgenden Schritte aufweist:
a) Bereitstellen eines Erzeugers nach einem beliebigen der Ansprüche 12 und 14;
b) Unterstromsetzen der Spule (150), um die Katalysekammer (120) zu öffnen, indem der Stab gegenüber der Spule derart bewegt wird, dass die Flüssigkeit in die Katalysekammer eindringt und mit dem Katalysator (110) in Kontakt kommt; und
c) möglicherweise Schließen des katalytischen Systems, indem die Stromversorgung der Spule unterbrochen wird.

## Claims

1. Device (15) including a catalytic system (60) and an electromagnetic system (65),
the catalytic system defining a catalysis chamber (120) and including a catalyst (110) of a reaction to generate a gas from a liquid (40), the catalyst being housed in the catalysis chamber,
the electromagnetic system including a coil (150) and a rod (155) mobile relative to the coil, the rod being fixed to the catalytic system and including a magnet (175) and a core (170),
the electromagnetic system being configured to move the rod relative to the coil when an electrical current is passed through the coil, so as to dispose the catalytic system in an open position in which the catalysis chamber is in fluidic communication with the outside,
the catalytic system being disposed in a closed position in which the catalysis chamber is hermetically closed in the absence of electrical current through the coil.

2. Device according to Claim 1, at least a part of the catalytic system being subjected to an electromagnetic closing force induced by the magnet that holds the catalytic system in the closed position in the absence of electrical current through the coil.

3. Device according to either one of Claims 1 and 2, the catalytic system including a first part (100) and a second part (95) fixed rigidly to the rod, the first and second parts together defining the catalysis chamber and being mobile relative to one another between the open and closed positions.

4. Device according to Claims 2 and 3, said part of the catalytic system including at least the first part and/or the catalyst.

5. Device according to either one of Claims 3 and 4, the second part being compressed between the first part and the rod in the closed position.

6. Device according to any one of Claims 3 to 5, including a casing (70), the first part being rigidly fixed to the casing, the first part and the casing forming a cage in which the coil is trapped.

7. Device according to any one of the preceding claims, the magnet being fixed to one longitudinal end (190) of the core, with preferably the rod including another magnet (180) fixed to the longitudinal end (185) of the core opposite the longitudinal end (190) to which the magnet (175) is fixed, the poles of the same polarity of the magnet and of the other magnet being disposed facing one another.

8. Device according to any one of the preceding claims, including a spring (200) for applying an elastic force to the catalytic system.

9. Device according to the preceding claim, the spring being compressed by the catalytic system in the open position, and optionally so in the closed position.

10. Device according to either one of Claims 8 and 9, the spring applying an elastic closing force to the catalytic system to hold the catalytic system in the closed position in the absence of the passage of the electrical current in the coil, in particular in the absence of magnetic attraction between the magnet and the catalytic system, with preferably the spring being housed between the coil and the catalytic system.

11. Device according to any one of the preceding claims, including a buoy (210) conformed so that when the device is brought into contact with a liquid having a specific gravity greater than 0.6 the buoy floats on the liquid and the catalytic system is at least partly, preferably entirely immersed in the liquid.

12. Gas generator (5), the generator including:
- an enclosure (10) defining an interior space (35) containing a liquid (40),
- a device (5) according to any one of the preceding claims at least partly immersed in the liquid so that in the open position the liquid penetrates into the catalysis chamber (120) and the gas is generated by bringing the liquid into contact with the catalyst.

13. Gas generator according to the preceding claim, the liquid being chosen from a solution, preferably an aqueous solution, of hydride and a liquid organic hydrogen carrier.

14. Gas generator according to either one of Claims 12 and 13, the device being freely mobile in the enclosure.

15. Method of generating a gas, preferably dihydrogen, including the following successive steps:
a) procuring a generator according to any one of Claims 12 to 14;
b) supplying electrical power to the coil (150) to open the catalysis chamber (120) by moving the rod relative to the coil so that the liquid penetrates into the catalysis chamber and comes into contact with the catalyst (110); and
c) optionally closing the catalytic system by cutting off the supply of electrical power to the coil.
